# EUROPÄISCHE PATENTSCHRIFT

(11) **EP 1 270 344 B1**
(45) Veröffentlichungstag und Bekanntmachung des Hinweises auf die Patenterteilung: **10.08.2005**
(21) Anmeldenummer: 02012417.8
(22) Anmeldetag: 07.06.2002
(51) Int. Cl.: B60R 21/34, B60R 21/01

(54) **Vorrichtung an einem Fahrzeug zum Schutz einer vom Fahrzeug erfassten Person sowie Verfahren zum Ansteuern einer Sicherheitseinrichtung**
Device on a vehicle for protecting a person detected by the vehicle and process for triggering a safety system
Dispositif sur un véhicule pour protéger une personne détectée par le véhicule et procédé de déclenchement d'un système de sécurité

(30) Priorität: 19.06.2001 DE 10129182
(43) Veröffentlichungstag der Anmeldung: 02.01.2003
(73) Patentinhaber: TRW Automotive GmbH, 73553 Alfdorf (DE); TRW Automotive Electronics & Components GmbH & Co. KG, 78315 Radolfzell (DE)
(72) Erfinder: Miodek, Thomas, 73557 Mutlangen (DE); Peter, Cornelius, 77815 Bühl (DE)
(74) Vertreter: Kitzhofer, Thomas, Dipl.-Ing.

(56) Entgegenhaltungen:
- EP-A- 0 967 128
- EP-A- 1 078 826
- DE-A- 2 711 338
- DE-A- 19 712 961
- DE-A- 19 745 873

## Beschreibung

Die Erfindung betrifft eine Vorrichtung an einem Fahrzeug zum Schutz einer vom Fahrzeug erfaßten Person, insbesondere eines Fußgängers oder Zweiradfahrers, sowie ein Verfahren zum Ansteuern, vorzugsweise Auslösen einer Sicherheitseinrichtung für eine von einem Fahrzeug erfaßten Person im Bereich der Motorhaube und/oder der Außenseite der Windschutzscheibe, wobei das Fahrzeug eine durch einen Antrieb bei einem Aufprall der Person anzuhebende Motorhaube aufweist.

Es sind Ideen vorhanden, ein Fahrzeug mit Sicherheitseinrichtungen für Fußgänger oder Zweiradfahrer auszustatten. Die DE 2 711 338 A1 schlägt einen Gassack im Bereich der Hinterkante der Motorhaube vor, der sich aufbläst und die vom Fahrzeug erfaßte Person vor einem Aufprall auf die Windschutzscheibe schützen soll.

Die DE 198 03 165 A1 schlägt einen Gassack entlang des Rahmens der Windschutzscheibe vor.

Die DE 197 45 873 beschreibt einen im Rahmen des Fahrzeugs untergebrachten, eine Scheibe abdeckenden Gassack.

Die Motorhaube anzuheben, um den Deformationsweg der Motorhaube für die Person zu erhöhen, schlägt die DE 197 12 961 A1 vor.

Ein Mechanismus zum Anheben der Motorhaube ist in der EP 1 078 826 A1 gezeigt.

Die gattungsbildende EP 0 937 612 A schlägt eine Vorrichtung und ein Verfahren zum Schutz einer vom Fahrzeug erfaßten Person vor, mit einer Sicherheitseinrichtung im Bereich der Motorhaube oder im Bereich der Windschutzscheibe. Die Sicherheitseinrichtung kann ein Motorhaubenanheber oder ein Airbag im Bereich der Motorhaube sein. Ein Unfall mit einem Fußgänger wird hierbei durch einen Sensor detektiert, der beispielsweise in der Stoßstange des Fahrzeugs untergebracht ist. Eine weitere vorgestellte Möglichkeit besteht darin, die Motorhaube selbst als Sensor auszubilden, wobei eine Deformation der Motorhaube gemessen werden kann. Die Sensoren sind als Signalgeber zum Auslösen von einer der beschriebenen Sicherheitseinrichtungen vorgesehen.

Die Erfindung schafft eine Vorrichtung zum Schutz einer von einem Fahrzeug erfaßten Person, die sich durch eine relativ einfache und sichere Sensorik auszeichnet. Dies wird durch eine erfindungsgemäße Vorrichtung nach Anspruch 1 erreicht. Bei der erfindungsgemäßen Vorrichtung wird die bereits vollständig mittels des Antriebs angehobene oder sich im Anheben befindliche Motorhaube Funktionsteil einer Sensorik, denn der Aufprall der Person auf die Motorhaube führt zu einer Krafteinwirkung auf sie, die zu einer Positionsänderung des Antriebs oder einer Krafteinwirkung auf den Antrieb führt. Der Aufprall der Person auf die Motorhaube wird in der Auslöseeinrichtung erfaßt. Die Auslöseeinrichtung steuert schließlich die Sicherheitseinrichtung an, die vorzugsweise eine Aufblaseinrichtung ist, die einen Gassack entfaltet, der sich an der Außenseite der Winschutzscheibe nach dem Aufblasen befindet.

Die erfindungsgemäße Vorrichtung ermöglicht es auch, weitestgehend zwischen einem erfaßten Gegenstand und einer erfaßten Person zu unterscheiden. Ein erfaßter Gegenstand wird aufgrund seines im Vergleich zu einer Person tiefen

Schwerpunktes nicht über das Fahrzeug geschleudert werden oder wird zumindest auf den hinteren Teil der Motorhaube keinen so hohen Impuls ausüben wie eine Person. Bei einer Person ergibt sich ein relativ typischer Bewegungsablauf beim Erfassen durch das Fahrzeug. Die auf die teilweise oder vollständig angehobene Motorhaube durch die Person ausgeübten spezifischen Kräfte ermöglichen es, die Sicherheitseinrichtung nur bei einem Unfall mit einer Person auszulösen.

Die Auslöseeinrichtung nimmt vorzugsweise Daten über die Auswirkungen des Aufpralls auf die Motorhaube auf und analysiert diese Daten, um ein Signal zu erzeugen, was zum Ansteuern oder Aktivieren der Sicherheitseinrichtung führt. Es wäre möglich, nach einer Analyse der Daten stets dann eine Aktivierung der Sicherheitseinrichtung zu initiieren, wenn z.B. eine gewisse Verstellung der wenigstens teilweise angehobenen Motorhaube durch den Impuls beim Aufprall hervorgerufen wird.

Eine hierzu noch weitergehende Ausführungsform sieht vor, daß die Auslöseeinrichtung ausgebildet ist, um aus den beim Aufprall erhaltenen Daten zu ermitteln, ob eine Person oder ein Gegenstand auf die Motorhaube prallte, wie zuvor schon erläutert. Nur beim Detektieren einer Person wird die Sicherheitseinrichtung von der Auslöseeinrichtung aktiviert.

Bei der bevorzugten Ausführungsform ist der Antrieb ein elektromotorischer Antrieb, insbesondere ein hochdynamischer Gleichstrommotor, wie er in der DE 201 06 478.2 beschrieben ist. Die Auslöseeinrichtung ist mit dem Antrieb gekoppelt, um die Änderungen der Motordaten, die durch den Aufprall hervorgerufen werden, aufzunehmen. Das bedeutet, daß der elektromotorische Antrieb nicht nur zum Anheben der Motorhaube dient, sondern beim Aufprall der Person oder eines Gegenstands gleichzeitig als eine Art Sensor, was den Aufwand für die Steuerung und Sensorik der Vorrichtung erheblich reduziert. Gegebenenfalls kann die Motorhaube auch Teil der erfindungsgemäßen Vorrichtung sein und sozusagen eine äußere Sensorfläche bilden.

Die Erfindung schafft darüber hinaus ein Verfahren zum Ansteuern, vorzugsweise Auslösen einer Sicherheitseinrichtung nach Anspruch 9. Das erfindungsgemäße Verfahren sieht vor, daß beim Aufprall der Person auf die Motorhaube Daten von einer Auslöseeinrichtung erfaßt und in ihr weiterverarbeitet werden. Die Auslöseeinrichtung steuert abhängig von den Daten oder aktiviert die Sicherheitseinrichtung. Es können zwei Einrichtungen zum Schutz der Person vorgesehen sein, nämlich einerseits die Sicherheitseinrichtung mit der Motorhaube und andererseits eine Sicherheitseinrichtung im Bereich der Windschutzscheibe. Die eine Sicherheitseinrichtung, nämlich die mit der Motorhaube, dient der Auslösung der zweiten Einrichtung im Bereich der Windschutzscheibe, indem die Daten beim Aufprall auf die Motorhaube erfaßt und vorzugsweise analysiert werden, um dann schließlich das Auslösen der zweiten Sicherheitseinrichtung zu initiieren. Gemäß einer anderen Ausführungsform kann jedoch nur eine Sicherheitseinrichtung vorgesehen sein, nämlich die, die durch die Motorhaube und den Antrieb zum Anheben derselben gebildet ist. Bei dieser Ausführungsform wird beispielsweise dann, wenn die Motorhaube angehoben wird und kein Aufprall auf die Motorhaube ermittelt werden kann, die Sicherheitseinrichtung, genauer der Antrieb der Motorhaube, von der Auslöseeinrichtung angesteuert. Die Auslöseeinrichtung geht davon aus, daß eine z.B. versehentliche Anhebung der Motorhaube stattfand und initiiert ein Absenken der Motorhaube, indem der Antrieb entsprechend angesteuert wird. Die beiden Funktionen, Ansteuern einer zweiten Sicherheitseinrichtung oder Absenken der Motorhaube bei einer unnötigen Auslösung können natürlich innerhalb derselben Vorrichtung verwirklicht werden, indem die Auslöseeinrichtung einfach entsprechend programmiert wird.

Wie bereits anhand der erfindungsgemäßen Vorrichtung erläutert, werden die Daten vom Antrieb abgegriffen, der als elektromotorischer Antrieb ausgebildet sein kann. Darüber hinaus wäre es denkbar, daß ein Federspeicherantrieb, ein hydraulischer oder pyrotechnischer Antrieb vorgesehen ist. Der Aufwand für die Sensorik zum Auslösen der Sicherheitseinrichtung kann jedoch erheblich reduziert werden, wenn der Antrieb als Sensor zum Erfassen des Aufpralls dient.

Das erfindungsgemäße Verfahren sieht gemäß einer Ausführungsform vor, daß auch beim Aufprall eines Gegenstands auf die Motorhaube Daten erfaßt werden und daß in der Auslöseeinrichtung anhand der ermittelten Daten ermittelt wird, ob ein Gegenstand oder eine Person auf die Motorhaube geprallt ist. Nur dann, wenn eine Person ermittelt wurde, wird von der Auslöseeinrichtung die Sicherheitseinrichtung aktiviert.

Wenn ein elektromotorischer Antrieb vorgesehen ist, wird vorzugsweise beim Anheben der Motorhaube die Änderung der Motordrehzahl und/oder die vom Antrieb benötigte Energie erfaßt. Durch den Aufprall des Gegenstands oder der Person wird die elektrische Energie, die der Motor zum Anheben der Motorhaube benötigt, steigen. Das bedeutet, der Elektromotor "zieht" sofort mehr Strom. Dieser sofortige Anstieg der Stromstärke wird in der Auslöseeinrichtung detektiert und als Signal gedeutet, das für einen Aufprall charakteristisch ist. Der Begriff "beim Anheben" bedeutet, daß sich die Motorhaube noch in der Phase des Anhebens befindet.

Eine Plausibilitätsprüfung kann in der Auslöseeinrichtung durchgeführt werden, indem ein Vergleich zwischen ermittelten und abgespeicherten Daten durchgeführt wird. Beispielsweise sind in der Auslöseeinrichtung Motorkennlinien oder dergleichen für den Motor bei unbelasteter Haube abgespeichert, die dann als Referenzwert für die ermittelten Daten beim Aufprall des Gegenstands oder der Person dienen.

Ist die Motorhaube bereits angehoben, kann beispielsweise die Änderung des Stellwinkels des Motors oder die dem Antrieb zugeführte Energie ermittelt werden. Entsprechende Daten werden dann in der Auslöseeinrichtung verarbeitet.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 ein mit der erfindungsgemäßen Vorrichtung ausgestattetes Fahrzeug mit angehobener Motorhaube und nicht aktivierter zusätzlicher Sicherheitseinrichtung,
- Figur 2 die erfindungsgemäße Vorrichtung in schematische r Darstellung,
- Figur 3 das erfindungsgemäße Fahrzeug mit angehobener Motorhaube und aktivierter Sicherheitseinrichtung,
- Figur 4 Kennlinien a und b des Gleichstrommotors der erfindungsgemäßen Vorrichtung bei unbelasteter Motorhaube (Kennlinie b) und bei Aufprall einer Person auf die Motorhaube (Kennlinie a).

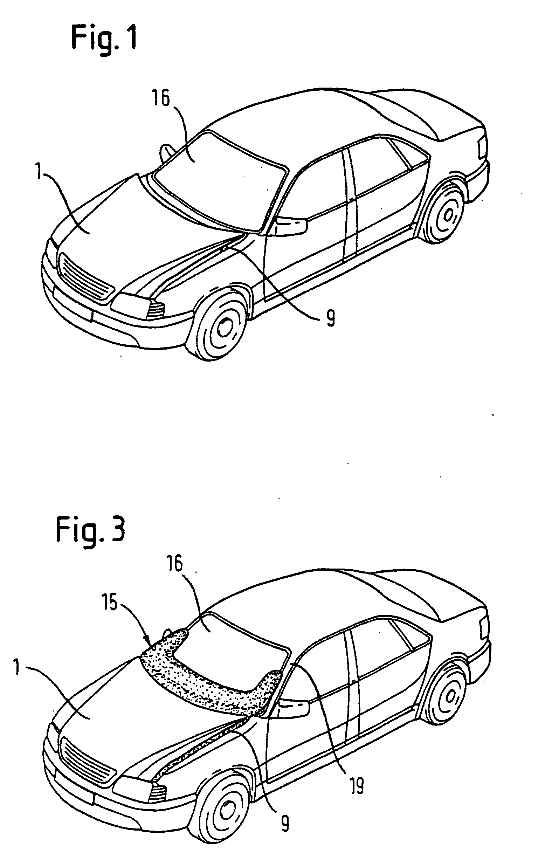

In Figur 1 ist ein Fahrzeug dargestellt, das mit einer Vorrichtung zum Schutz einer vom Fahrzeug erfaßten Person, beispielsweise eines Fußgängers oder eines Radfahrers ausgestattet ist. Das Fahrzeug besitzt eine Motorhaube 1, die im Bereich des rückseitigen Endes mittels an beiden Seiten angeordneter Antriebe 3 angehoben werden kann, wenn von Sensoren 17 ein Hindernis, das mit dem Fahrzeug kollidiert, erfaßt wird. Jeder Antrieb 3 ist ein hochdynamischer Gleichstrommotor, wie er in der DE 201 06 478.2 beschrieben ist. Mit 5 sind die Halterungen für den Antrieb 3 bezeichnet. Jeder der beiden Antriebe 3 ist über einen Hebel 7 mit einem Flansch 9 an der Motorhaube 1 befestigt.

Eine zentrale Steuerungseinheit 11 ist mit jedem Antrieb 3 verbunden und aktiviert diesen. Die Steuerungseinheit ist darüber hinaus mit einer Aufblaseinrichtung 13 in Form eines Gasgenerators für einen unterhalb des hinteren Randes der Motorhaube 1 angebrachten Gassacks 15 verbunden. Der Gassack 15 tritt unterhalb des hinteren Randes der Motorhaube 1 beim Aufblasen aus und legt sich an den unteren Rand der Windschutzscheibe 16, den unteren horizontalen Rahmen, an dem die Windschutzscheibe anliegt, und an die A-Säulen sowie an den Scheibenwischer samt Anlenkung an, um diese Teile abzudecken. Der Gassack 15 hat eine U-förmige Gestalt und erlaubt dem Fahrer auch im aufgeblasenen Zustand Sicht. Die Geometrie und Lage des Gassacks 15 ist nicht auf die Verwendung in einer erfindungsgemäßen Vorrichtung beschränkt. Gassack 15 und Aufblaseinrichtung 13 bilden eine Sicherheitseinrichtung für vom Fahrzeug erfaßte Personen. Darüber hinaus sind natürlich auch die beiden Antriebe 3 zum Anheben der Motorhaube 1 eine Sicherheitseinrichtung zum Schutz von sich außerhalb des Fahrzeugs befindlichen und von ihm erfaßten Personen.

Die erfindungsgemäße Vorrichtung umfaßt die Antriebe 3, die Steuerungseinrichtung 11, die Aufblaseinrichtung 13 und den Gassack 15. Die Vorrichtung ist mit der Motorhaube 1 funktional gekoppelt, wobei die Motorhaube 1 auch Teil der Vorrichtung sein kann.

Die Funktion der dargestellten Vorrichtung wird im folgenden erläutert. An der Fahrzeugfront angeordnete Sensoren 17, die mit der Steuerungseinrichtung 11 verbunden sind, erfassen Personen und Objekte und den Abstand zum Fahrzeug. Diese sogenannten vorausschauenden Sensoren 17, verbunden mit der Steuerungseinrichtung 11, machen es möglich, einen nicht mehr zu vermeidenden Zusammenstoß vom Fahrzeug mit der Person oder dem Objekt zu bestimmen. Alternativ kann auch eine Kontaktsensorik, z.B. im Stoßfänger, vorgesehen sein.

Sobald eine solche Situation auftritt, steuert die Steuerungseinrichtung 11 die beiden Antriebe 3 an, und die Gleichstrommotoren heben schlagartig die Motorhaube 1 am hinteren Rand an, um den Deformationsweg für die Person zu vergrößern

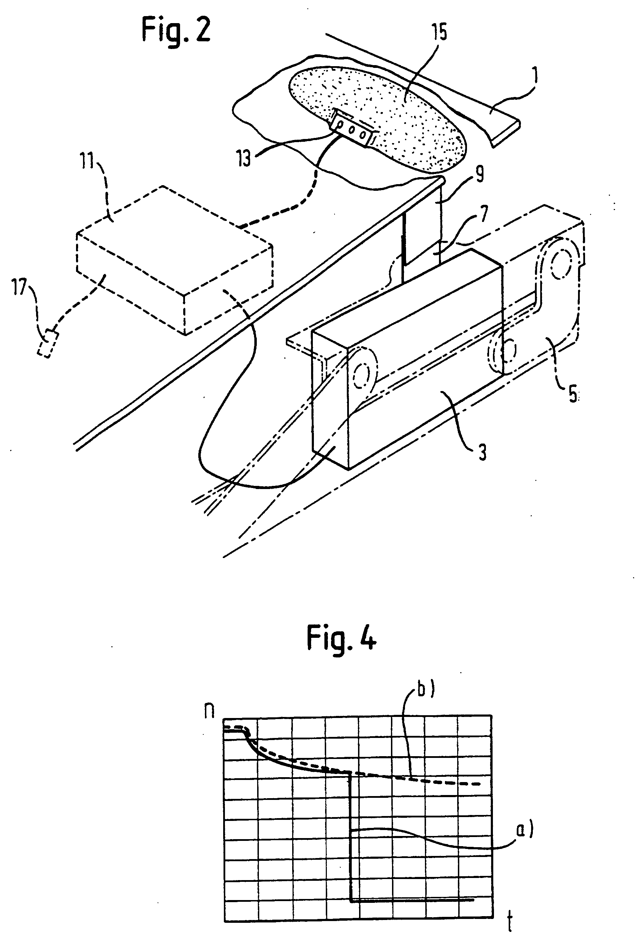

Der Ablauf der Bewegung der Person nach dem Erfassen durch das Fahrzeug unterscheidet sich normalerweise von dem eines erfaßten Objekts. Aufgrund der Krafteinwirkung auf bestimmte Teile der Motorhaube 1 lassen sich die Auswirkungen des Aufpralls einer Person auf die Motorhaube und ihre Lagerung (Antriebe 3) durch geeignete Tests ermitteln. Entsprechende Daten können auch in der Steuerungseinrichtung 11 abgelegt sein, wie anhand der Motordrehzahl bei unbelasteter Motorhaube 1 mit der Kennlinie b) in Fig. 4 gezeigt.

Befindet sich die Motorhaube 1 noch in der Aufwärtsbewegung, wenn eine Person auf sie trifft, so wird die Masse, die der Antrieb 3 anzuheben versucht, unmittelbar erhöht. Damit ergibt sich eine schlagartige Absenkung der Motordrehzahl, wie es in Figur 4 dargestellt ist, und eine Erhöhung der vom Motor angeforderten elektrischen Energie. Die Motordrehzahl und die Stärke des Stromes werden von der Steuerungseinrichtung 11 permanent überwacht, so daß über die Antriebe 3 unmittelbar der Aufprall und die Aufprallintensität detektiert werden. Die Steuerungseinrichtung 11 vergleicht die aufgenommenen Daten mit abgespeicherten Referenzwerten. Beispielsweise dann, wenn die erhaltenen Daten über den Aufprall einen vorbestimmten Wert überschreiten, geht man davon aus, daß ein Aufprall auf der Motorhaube stattgefunden hat.

Es gibt verschiedene Ausführungsformen der erfindungsgemäßen Vorrichtung.

Eine Ausführungsform sieht vor, daß stets dann, wenn ein solcher Aufprall detektiert wird, die Sicherheitseinrichtung von der Steuerungseinrichtung aktiviert wird, unabhängig davon, ob ein Gegenstand oder eine Person auf die Motorhaube traf. Bei dieser Ausführungsform geht man vereinfacht davon aus, daß übliche von einem Fahrzeug erfaßte Gegenstände einen relativ tiefen Schwerpunkt haben und nicht auf die Motorhaube treffen, was aber typisch für eine Person ist. Somit kann man mit einer relativ hohen Wahrscheinlichkeit davon ausgehen, daß bei einem Aufprall auf die Motorhaube eine Person beteiligt ist.

Bei einer anderen Ausführungsform soll die Option, daß auch ein Gegenstand auf die Motorhaube 1 treffen kann, mit berücksichtigt werden. Die Steuerungs- und Auslöseeinrichtung 11 soll deshalb ermitteln, ob es sich um eine Person oder um einen Gegenstand handelt, der mit der Motorhaube 1 kollidierte. Bei der Datenanalyse wird dabei vorzugsweise eine Plausibilitätsprüfung durchgeführt, indem z.B. eine abgespeicherte Motorkennlinie der Antriebe 3 oder andere spezifische Kennwerte bei unbelasteter Motorhaube herangezogen werden.

Die Steuerungseinrichtung 11 initiiert, sobald sie ermittelt hat, daß eine Person die Motorhaube 1 kontaktiert haben dürfte oder, allgemeiner, ein Aufprall stattfand, die Auslösung der Aufblaseinrichtung 13. Der U-förmige Gassack 15 wird aufgeblasen und deckt den unteren Bereich der Windschutzscheibe 16, den angrenzenden Rahmen und die Scheibenwischer samt Anlenkung und die A-Säulen 19 ab. Die Steuerungseinrichtung 11 dient damit als Auslöseeinrichtung für die Sicherheitseinrichtung.

Sollte die Motorhaube 1 bereits vollständig durch die Antriebe 3 angehoben sein, wenn die Person die Motorhaube 1 kontaktiert, wird die Motorhaube 1 durch den Aufprall nach unten bewegt, was zu einer Änderung des Stellwinkels am Gleichstrommotor führt. Diese Änderung wird zur Detektion einer Person verwendet, indem die Steuerungseinrichtung 11 entsprechende Daten über die Änderung des Stellwinkels erhält. Alternativ kann auch der Stromverbrauch des Gleichstrommotors, der mit dem Aufprall schlagartig steigt, Aufschluß über den Aufprall geben. Die Steuerungseinrichtung 11 dient schließlich wieder als Auslöseeinrichtung und aktiviert die Aufblaseinrichtung 13.

In den Antrieben 3 können Lage- oder Bewegungsänderungen in Form der Motordrehzahländerungen oder auch Änderungen im Energieverbrauch oder im Momentenverlauf beim Aufprall des Gegenstandes oder der Person dazu dienen, den Aufprall zu detektieren und gegebenenfalls zu bestimmen, ob eine Person oder ein Gegenstand die Motorhaube 1 kontaktiert hat.

Die Sicherheitseinrichtung, die von der Steuerungseinrichtung 11 angesteuert wird, kann auch die aktive Motorhaube selbst sein. Wurde beispielsweise wider Erwarten der Gegenstand oder die Person doch nicht vom Fahrzeug erfaßt, und wurde dennoch die Motorhaube 1 durch die Antriebe 3 angehoben, so folgt aber kein Auftreffen des Gegenstands oder der Person auf die Motorhaube 1. Folglich wird innerhalb eines bestimmten Zeitraums nach dem Anheben der Motorhaube in den Daten keine ungewöhnliche Änderung detektiert. Die Steuerungseinrichtung 11 steuert dann die Antriebe 3 an, die die Motorhaube 1 wieder in die nicht angehobene Grundstellung bringen. Diese Funktion kann zusätzlich zu der Sicherheitseinrichtung mit dem Gassack oder alternativ zu ihr vorgesehen sein. Bei der alternativen Ausführungsform gibt es dann gar keinen Gassack am Außenbereich der Windschutzscheibe oder zumindest keinen funktional mit der Motorhaube gekoppelten Gassack.

## Patentansprüche

1. Vorrichtung an einem Fahrzeug zum Schutz einer vom Fahrzeug erfaßten Person, mit
wenigstens einem Antrieb (3) zum Anheben der Motorhaube (1) bei einem Unfall mit der Person,
einer Sicherheitseinrichtung für die Person im Bereich der Motorhaube (1) oder sowohl im Bereich der Motorhaube (1) als auch im Bereich der Windschutzscheibe (16) des Fahrzeugs,
**dadurch gekennzeichnet, daß**
mit dem Antrieb (3) der Motorhaube und der Sicherheitseinrichtung eine Auslöseeinrichtung gekoppelt ist, welche eine durch den Aufprall der Person auf die Motorhaube (1) im Antrieb hervorgerufene Lage-, Bewegungs- oder Kraftänderung erfassen und die Sicherheitseinrichtung ansteuern, vorzugsweise aktivieren kann.

2. Vorrichtung nach Anspruch 1, **dadurch gekennzeichnet, daß** die Auslöseeinrichtung Daten über die Auswirkungen des Aufpralls auf die Motorhaube (1) aufnimmt und analysiert, um ein Signal zu erzeugen, was zum Aktivieren der Sicherheitseinrichtung führt.

3. Vorrichtung nach Anspruch 2, **dadurch gekennzeichnet, daß** die Auslöseeinrichtung so ausgebildet ist, daß sie aus den erhaltenen Daten einen Aufprall ermitteln kann.

4. Vorrichtung nach Anspruch 3, **dadurch gekennzeichnet, daß** die Auslöseeinrichtung aus den erhaltenen Daten ermitteln kann, ob eine Person oder ein Gegenstand auf die Motorhaube prallte und daß sie nur beim Detektieren einer Person die Sicherheitseinrichtung aktiviert.

5. Vorrichtung nach einem der vorhergehenden Ansprüche, **dadurch gekennzeichnet, daß** der Antrieb (3) ein elektromotorischer Antrieb ist und die Auslöseeinrichtung mit dem Antrieb (3) gekoppelt ist, um die Änderungen der Antriebsdaten, die durch den Aufprall hervorgerufen werden, aufzunehmen.

6. Vorrichtung nach Anspruch 5, **dadurch gekennzeichnet, daß** der Antrieb (3) ein dynamischer Gleichstrommotor ist.

7. Vorrichtung nach einem der vorhergehenden Ansprüche, **dadurch gekennzeichnet, daß** die Sicherheitseinrichtung eine Aufblaseinrichtung (13) und einen sich nach dem Aufblasen auf der Außenseite der Windschutzscheibe (16) befindlichen Gassack (15) aufweist.

8. Vorrichtung nach einem der Ansprüche 1 bis 7, **dadurch gekennzeichnet, daß** die Sicherheitseinrichtung, die durch die Auslöseeinrichtung angesteuert wird, der Antrieb (3) der Motorhaube (1) ist, wobei dann, wenn nach dem Anheben der Motorhaube (1) kein Aufprall detektiert wird, die Auslöseeinrichtung den Antrieb (3) zum Absenken der Motorhaube (1) ansteuert.

9. Verfahren zum Ansteuern, insbesondere Auslösen einer Sicherheitseinrichtung im Bereich der Motorhaube (1) oder sowohl im Bereich der Motorhaube als auch im Bereich der Windschutzscheibe (16) für eine von einem Fahrzeug erfaßten Person,
wobei das Fahrzeug eine durch wenigstens einen Antrieb (3) bei einem Aufprall der Person anzuhebende Motorhaube (1) aufweist, **gekennzeichnet durch** folgende Schritte:
a) beim Aufprall der Person auf die Motorhaube (1) werden Daten vom Antrieb (3) abgegriffen und erfaßt und in einer Auslöseeinrichtung weiterverarbeitet,
b) die Auslöseeinrichtung steuert abhängig von den Daten die Sicherheitseinrichtung an, insbesondere indem sie die Sicherheitseinrichtung aktiviert.

10. Verfahren nach Anspruch 9, **dadurch gekennzeichnet, daß** die Auslöseeinrichtung immer dann, wenn die erhaltenen Daten über den Aufprall einen vorbestimmten Wert überschreiten, die Sicherheitseinrichtung ansteuert.

11. Verfahren nach Anspruch 10, **dadurch gekennzeichnet, daß** die Auslöseeinrichtung auch beim Aufprall eines Gegenstands auf die Motorhaube (1) Daten erfaßt und daß in der Auslöseeinrichtung anhand der Daten ermittelt wird, ob ein Gegenstand oder eine Person auf die Motorhaube (1) geprallt ist.

12. Verfahren nach Anspruch 11, **dadurch gekennzeichnet, daß** nur dann, wenn auf den Aufprall einer Person geschlossen wird, die Sicherheitseinrichtung ausgelöst wird.

13. Verfahren nach einem der Ansprüche 9 bis 12, **dadurch gekennzeichnet, daß** dann, wenn kein Aufprall ermittelt wird, der Antrieb (3) zum Anheben der Motorhaube (1) angesteuert wird, um das Absenken der Motorhaube (1) herbeizuführen.

14. Verfahren nach einem der Ansprüche 9 bis 13, **dadurch gekennzeichnet, daß** ein elektromotorischer Antrieb verwendet wird.

15. Verfahren nach Anspruch 14, **dadurch gekennzeichnet, daß** beim Anheben der Motorhaube (1) die Änderung der Motordrehzahl und/oder die vom Antrieb (3) benötigte Energie zum Detektieren und/oder Analysieren eines Aufpralls erfaßt und verarbeitet werden/wird.

16. Verfahren nach Anspruch 15, **dadurch gekennzeichnet, daß** eine Plausibilitätsprüfung in der Auslöseeinrichtung durchgeführt wird, indem die durch den Aufprall auf die Motorhaube (1) ermittelten Daten mit gespeicherten, für den Antrieb spezifischen Werten bei unbelasteter Motorhaube (1) verglichen werden.

17. Verfahren nach einem der Ansprüche 14 bis 16, **dadurch gekennzeichnet, daß** nach erfolgtem Anheben der Motorhaube (1) die Daten ermittelt werden, indem die Änderung des Stellwinkels des Antriebs (3) oder der dem Antrieb (3) zugeführten Energie ermittelt wird.

## Claims

1. A device on a vehicle for the protection of a person struck by the vehicle, comprising
at least one drive (3) to raise the engine hood (1) upon a collision with the person,
a safety means for the person in the area of the engine hood (1) or both in the area of the engine hood (1) and in the area of the windshield (16) of the vehicle,
**characterized in that**
a triggering means is coupled to the drive (3) of the engine hood and to the safety means, the triggering means being adapted to detect a change in position, movement or force brought about in the drive by the impact of the person against the engine hood (1), and to actuate, preferably activate, the safety means.

2. The device according to claim 1, **characterized in that** the triggering means collects data about the effects of the impact against the engine hood (1) and analyzes this data in order to generate a signal, which leads to the activation of the safety means.

3. The device according to claim 2, **characterized in that** the triggering means is configured so as to determine an impact on the basis of the data received.

4. The device according to claim 3, **characterized in that** the triggering means can determine on the basis of the data received whether a person or an object has struck the engine hood, and **in that** it only activates the safety means if a person is detected.

5. The device according to any of the preceding claims, **characterized in that** the drive (3) is an electric motor drive and the triggering means is coupled to the drive (3) in order to receive the changes in the drive data that are brought about by the impact.

6. The device according to Claim 5, **characterized in that** the drive (3) is a dynamic direct current motor.

7. The device according to any of the preceding claims, **characterized in that** the safety means has an inflation means (13) and an airbag (15) that is situated on the outside of the windshield (16) after being inflated.

8. The device according to any of claims 1 to 7, **characterized in that** the safety means that is actuated by the triggering means is the drive (3) of the engine hood (1), and if no impact is detected after the engine hood (1) has been raised, the triggering means actuates the drive (3) for lowering the engine hood (1).

9. A method of actuating, in particular triggering, a safety means in the area of the engine hood (1) or both in the area of the engine hood and in the area of the windshield (16), for a person struck by a vehicle,
the vehicle having an engine hood (1) to be raised by at least one drive (3) upon an impact of the person, **characterized by** the following steps:
a) upon the impact of the person against the engine hood (1), data is picked up and acquired by the drive (3) and further processed in a triggering means,
b) depending on the data, the triggering means actuates the safety means, in particular by activating the safety means.

10. The method according to claim 9, **characterized in that**, whenever the data received about the impact exceeds a predetermined value, the triggering means actuates the safety means.

11. The method according to claim 10, **characterized in that** the triggering means acquires data also in case of an impact of an object against the engine hood (1) and **in that**, based on the data, it is determined in the triggering means whether an object or a person has hit the engine hood (1).

12. The method according to claim 11, **characterized in that** the safety means is triggered only if it is established that the impact is by a person.

13. The method according to any of claims 9 to 12, **characterized in that**, if no impact is determined, the drive (3) for raising the engine hood (1) is actuated in order to cause the engine hood (1) to be lowered.

14. The method according to any of claims 9 to 13, **characterized in that** an electric motor drive is used.

15. The method according to claim 14, **characterized in that**, during the raising of the engine hood (1), the change in the motor speed and/or the energy needed by the drive (3) is/are acquired and processed for detecting and/or analyzing an impact.

16. The method according to claim 15, **characterized in that** a plausibility check is carried out in the triggering means **in that** the data determined by the impact against the engine hood (1) is compared to stored values that are specific to the drive when the engine hood (1) is not loaded.

17. The method according to any of claims 14 to 16, **characterized in that** after raising of the engine hood (1) has been completed, the data is determined **in that** the change in the positional angle of the drive (3) or in the energy supplied to the drive (3) is determined.

## Revendications

1. Dispositif sur un véhicule pour protéger une personne heurtée par le véhicule, comportant
au moins un entraînement (3) pour soulever le capot (1) lors d'un accident avec la personne,
un dispositif de sécurité pour la personne dans la région du capot (1) ou tant dans la région du capot (1) que dans la région du pare-brise (16) du véhicule,
**caractérisé en ce que**
à l'entraînement (3) du capot et au dispositif de sécurité est accouplé un dispositif de déclenchement qui peut détecter un changement de position, de mouvement ou de force provoqué dans l'entraînement par l'impact de la personne sur le capot (1) et qui peut piloter, de préférence activer le dispositif de sécurité.

2. Dispositif selon la revendication 1, **caractérisé en ce que** le dispositif de déclenchement enregistre et analyse des données sur les répercussions de l'impact sur le capot pour engendrer un signal, ce qui entraîne l'activation du dispositif de sécurité.

3. Dispositif selon la revendication 2, **caractérisé en ce que** le dispositif de déclenchement est réalisé de telle sorte qu'il peut déterminer un impact sur la base des données obtenues.

4. Dispositif selon la revendication 3, **caractérisé en ce que** le dispositif de déclenchement peut déterminer, sur la base des données obtenues si une personne ou un objet a heurté le capot et **en ce qu'**il n'active le dispositif de sécurité que lorsqu'une personne est détectée.

5. Dispositif selon l'une des revendications précédentes, **caractérisé en ce que** l'entraînement (3) est un entraînement électromoteur et le dispositif de déclenchement est accouplé à l'entraînement (3) pour enregistrer les changements des données d'entraînement qui sont provoqués par l'impact.

6. Dispositif selon la revendication 5, **caractérisé en ce que** l'entraînement (3) est un moteur à courant continu dynamique.

7. Dispositif selon l'une des revendications précédentes, **caractérisé en ce que** le dispositif de sécurité présente un dispositif de gonflage (13) et un coussin à gaz (15) se trouvant après le gonflage sur la face extérieure du pare-brise (16).

8. Dispositif selon l'une des revendications 1 à 7, **caractérisé en ce que** le dispositif de sécurité, qui est piloté par le dispositif de déclenchement, est l'entraînement (3) du capot (1), le dispositif de déclenchement pilotant l'entraînement (3) pour baisser le capot (1) si aucun impact n'est détecté après le soulèvement du capot (1).

9. Procédé pour piloter, en particulier pour déclencher un dispositif de sécurité dans la région du capot (1) ou tant dans la région du capot que dans la région du pare-brise (16) pour une personne heurtée par un véhicule, le véhicule présentant un capot (1) à soulever par au moins un entraînement (3) lors d'un impact de la personne, **caractérisé par** les étapes suivantes :
a) lors de l'impact de la personne sur le capot (1), des données sont prélevées et saisies par l'entraînement (3) et traitées ultérieurement dans un dispositif de déclenchement,
b) le dispositif de déclenchement pilote le dispositif de sécurité en fonction des données, en particulier en activant le dispositif de sécurité.

10. Procédé selon la revendication 9, **caractérisé en ce que** le dispositif de déclenchement pilote toujours le dispositif de sécurité lorsque les données obtenues sur l'impact dépassent une valeur prédéterminée.

11. Procédé selon la revendication 10, **caractérisé en ce que** le dispositif de déclenchement saisit aussi des données lors de l'impact d'un objet sur le capot (1), et **en ce que** dans le dispositif de déclenchement, il est déterminé sur la base des données si c'est un objet ou une personne qui a heurté le capot (1).

12. Procédé selon la revendication 11, **caractérisé en ce que** le dispositif de sécurité n'est déclenché que si l'on conclut qu'il s'agit de l'impact d'une personne.

13. Procédé selon l'une des revendications 9 à 12, **caractérisé en ce que** si aucun impact n'est déterminé, l'entraînement (3) pour soulever le capot (1) est piloté pour provoquer l'abaissement du capot (1).

14. Procédé selon l'une des revendications 9 à 13, **caractérisé en ce qu'**on utilise un entraînement électromoteur.

15. Procédé selon la revendication 14, lors du soulèvement du capot (1), le changement de la vitesse du moteur et/ou l'énergie nécessitée par l'entraînement (3) sont/est est saisi/e(s) et traité/e(s) ultérieurement pour détecter et/ou analyser un impact.

16. Procédé selon la revendication 15, **caractérisé en ce qu'**on effectue un contrôle de plausibilité dans le dispositif de déclenchement en comparant les données déterminées par l'impact sur le capot (1) à des valeurs mémorisées spécifiques pour l'entraînement lors que le capot (1) n'est pas chargé.

17. Procédé selon l'une des revendications 14 à 16, **caractérisé en ce qu'**après que le soulèvement du capot (1) se soit produit, les données sont déterminées en déterminant le changement de l'angle d'incidence de l'entraînement (3) ou de l'énergie apportée à l'entraînement (3).
